# EUROPÄISCHE PATENTSCHRIFT

(11) **EP 2 685 094 B1**
(45) Veröffentlichungstag und Bekanntmachung des Hinweises auf die Patenterteilung: **13.05.2020**
(21) Anmeldenummer: 13165534.2
(22) Anmeldetag: 26.04.2013
(51) Int. Cl.: F03D 7/02, F03D 7/04

(54) **Steuerung eines Windparks**
Control of a wind farm
Commande d'un parc éolien

(30) Priorität: 10.07.2012 DE 102012013591
(43) Veröffentlichungstag der Anmeldung: 15.01.2014
(73) Patentinhaber: innogy SE, 45128 Essen (DE)
(72) Erfinder: Feltes, Christian Dr., 22453 Hamburg (DE)
(74) Vertreter: Cohausz & Florack

(56) Entgegenhaltungen:
- DE-A1-102010 026 244
- US-A1- 2012 104 754
- PRILLWITZ F ET AL: "Primärregelung mit Windkraftanlagen", ETG-WORKSHOP NEUE DEZENTRALE VERSORGUNGSSTRUKTUREN, 19.-20.02.2003, FRANKFURT/M, , 19 February 2003 (2003-02-19), pages 1-6, XP002473463, Retrieved from the Internet: URL:www.e-technik.uni-rostock.de/ee/downlo ad/publications_EEV/uni_hro_publ33_etg_fra nkfurt_2003.pdf [retrieved on 2010-02-08]

## Beschreibung

Der Gegenstand betrifft ein Verfahren zur Steuerung einer Windturbine sowie eines Windparks, insbesondere zur Regelung der Netzfrequenz durch Verändern von Einstellparametern.

Aus der US 2012/0104754 A1 ist ein System bekannt, welches abhängig von einer Spannungsmessung die Rotoreinstellparameter einer Windturbine beeinflusst.

Ein weiteres Dokument aus dem Stand der Technik ist XP002473463.

Aktuelle internationale Netzanschlussbedingungen (Grid Code), wie zum Beispiel der von National Grid und der neue europäische Grid Code der ENTSO-E fordern die Frequenzregelung auch durch Energiegewinnungsanlagen aus erneuerbaren Energien. Hierbei wird grundsätzlich zwischen den beiden Szenarien Unter- und Überfrequenz des Stromversorgungsnetzes unterschieden. Bei Überfrequenz wird eine Leistungsreduktion gefordert, was mit den Erzeugungsanlagen aus erneuerbarer Energie problemlos möglich ist. Bei Unterfrequenz wird für die Netzstützung eine Leistungserhöhung gefordert. Dies ist mit Erzeugungsanlagen aus erneuerbaren Energien nicht ohne Weiteres möglich, da diese in der Regel zu jeder Zeit versuchen, die volle aus der erneuerbaren Quelle verfügbare Leistung auszunutzen. Somit gibt es keine dauerhafte Möglichkeit der Leistungserhöhung mit diesen Anlagen.

Um diese Möglichkeit zu schaffen, könnte eine Anlage mit dauerhaft reduzierter Leistung betrieben werden. Dies führt jedoch zu einer reduzierten Einspeisung und somit zu einer Verschwendung von zur Verfügung stehender Leistung und geringerem Ertrag.

Um dies zu vermeiden, aber trotzdem einen temporären Beitrag zur Frequenzstützung bei Unterfrequenz zu leisten, wird in den aktuellen Grid Codes die Variante einer kurzzeitig erhöhten Leistungseinspeisung gewonnen aus der kinetischen Energie einer Windturbine gefordert. Hierbei wird bei einer Frequenzabsenkung die elektrische Abgabeleistung der Windturbine kurzzeitig erhöht, um die Frequenz des Stromversorgungsnetzes in den ersten Sekunden zu stützen, bis andere konventionelle Kraftwerke die Frequenz durch ihre primäre Energie stützen.

Eine derartige kurzzeitige Erhöhung der Leistung wird derzeit durch den Frequenzumrichter der Windturbine gesteuert. Dieser steuert den Generator derart an, dass er ein erhöhtes Gegenmoment am Rotor zeugt, was zu einem Abbremsen des Rotors führt. Es wird kurzzeitig mehr elektrische Energie aus der kinetischen Energie des Rotors gewonnen. Dafür wird der Rotor jedoch, wie erwähnt, abgebremst, da die Einspeiseleistung der Quelle konstant bleibt. Nachdem die Frequenzabsenkung überwunden wurde oder andere Kraftwerke die Frequenz stützen, muss die Windturbine wieder anfahren bzw. ihre ursprüngliche kinetische Rotationsenergie erreichen. Hierzu ist es notwendig, dass der Generator derart angesteuert wird, dass das Gegenmoment gegenüber dem Normalbetrieb verringert ist, um den Rotor die Möglichkeit zu geben, mit der zur Verfügung stehenden Leistung aus der Quelle eine erhöhte Drehgeschwindigkeit und somit eine höhere kinetische Energie zu erreichen.

Wenn der Frequenzumrichter den Generator als derart ansteuert, dass dieser ein geringeres Gegenmoment an der Rotorwelle anlegt, wird eine geringere elektrische Leistung durch die Windturbine erzeugt. Diese Verringerung der elektrischen Leistung würde unmittelbar nach der Frequenzstabilisierung erfolgen. Das hieße, dass die Windturbine zwar kurzzeitig die Netzfrequenz gestützt hätte, im Anschluss daran jedoch nur noch eine verringerte Leistung einspeisen würde, was bei einem ohnehin instabilen Energieversorgungsnetzes eventuell wieder zu einem Einbrechen der Netzfrequenz führen könnte. In der Folge könnte es dazu kommen, dass gerade durch die Regelung der Netzfrequenz durch die Erzeugungsanlagen die Netzfrequenz aufgrund des Leistungseinbruchs erneut einbricht.

Aus den zuvor genannten Gründen lag dem Gegenstand die Aufgabe zugrunde, ein Verfahren zur Verfügung zu stellen, mit dem die Netzfrequenz eines Stromversorgungsnetzes durch eine Windturbine nachhaltig gestützt werden kann.

Diese Aufgabe wird gegenständlich durch die unabhängigen Ansprüche gelöst. Durch die gegenständliche Lösung wird der aerodynamische Parkeffekt eines Windparks ausgenutzt. Mit Hilfe der gegenständlichen Lösung ist es möglich, eine länger andauernde Leistungserhöhung eines Windparks zur Verfügung zu stellen, ohne den Energieertrag des Windparks im Normalbetrieb zu verringern.

Gegenständlich wird vorgeschlagen, dass die Netzfrequenz eines an die Windturbine angeschlossenen Stromübertragungsnetzes gemessen wird. Durch die Messung ist es möglich, eine Veränderung der gemessenen Netzfrequenz zu detektieren. Beispielsweise ist es möglich, eine Veränderung der Netzfrequenz von weniger als 1Hz zu detektieren. Bei einer Veränderung der Netzfrequenz, insbesondere einem Absinken der Netzfrequenz, ist es notwendig, diese durch Erhöhen der Einspeiseleistung zu stützen, um sie wieder auf die Sollfrequenz zu bringen. Aus diesem Grunde wird vorgeschlagen, dass ein Einstellparameter für einen Rotor der Windturbine abhängig von der detektierten Änderung der Netzfrequenz verändert wird. Parallel dazu kann auch die Rotationsenergie der Windturbine durch Veränderung des Abbremsmoments des Generators genutzt werden, um eine erhöhte elektrische Leistung einzuspeisen. Zunächst führt aber ein veränderter Einstellparameter zu einer geänderten Einspeiseleistung. Insbesondere bei einem Absinken einer Netzfrequenz kann durch Veränderung des Einstellparameters des Rotors die Windturbine kurzzeitig eine erhöhte Leistungseinspeisung liefern.

In einem Windpark kann ein Abschattungseffekt der Windturbinen untereinander genutzt werden. Im Nachlauf einer Windturbine ist die Verwirbelung abhängig von den Einstellparametern des Rotors. Insbesondere die durch Windturbinen in einer ersten Reihe relativ zur Windrichtung verursachten Turbulenzen führen im Nachlauf an allen weiteren Windturbinen zu einem geringeren elektrischen Ertrag. Um diesen geringeren elektrischen Ertrag zu vermeiden, wird im Normalbetrieb die Windturbine, welche relativ zum Wind in erster Reihe des Windparks angeordnet ist, "angepitcht". Das heißt, dass der Pitch des Rotors voreingestellt ist, dass die Turbine eine etwas verringerte Leistung liefert, die Verwirbelung im Nachlauf verringert ist. Dies führt dazu, dass die relativ zur Windrichtung nach der ersten Windturbine angeordneten Windturbine eine erhöhte Leistung einspeisen können, da an deren Rotoren geringere Verwirbelungen auftreten. In Summe führt dies bei einem Windpark dazu, dass der Gesamtenergieertrag trotz "angepitchter" Rotorblätter der ersten Turbinen, maximiert ist.

Wenn nun eine Netzfrequenz sich verändert, insbesondere absinkt, kann die Rotoreinstellung der Windturbine in einer ersten Reihe relativ zur Windrichtung derart verändert werden, dass diese eine erhöhte elektrische Leistung liefert. Dies ist beispielsweise dadurch möglich, dass das durch die veränderte Rotoreinstellung, erhöhte Drehmoment des Rotors am Generator ausgenutzt wird, den Generator durch den Frequenzumrichter derart anzusteuern, dass dieser ein erhöhtes Gegenmoment erzeugt. Dies führt dazu, dass sich die Drehzahl des Rotors nicht oder nur um wenige Prozent (1% bis 10%) verändert, die elektrische Leistung am Generator jedoch erhöht wird. Somit kann eine Leistungserhöhung erzielt werden, ohne dass die betroffene Windturbine abgebremst werden muss. Durch das Hereindrehen der Rotorblätter in den Wind, kommt es im Nachlauf der Turbine jedoch zu erhöhten Turbulenzen. Bei herkömmlichen Abständen zwischen zwei Windturbinen in einem Windpark zwischen 500 und 1000 Metern erreichen die turbulenten Winde die nachgeordneten Windturbinen jedoch erst nach mehr als 20 Sekunden, vorzugsweise mehr als 30 Sekunden, insbesondere zwischen 30 und 60 Sekunden. Erst dann reduziert sich die elektrische Leistung an den nachgeordneten Windturbinen. Nach dieser Zeit sind jedoch die Kraftwerke herkömmlicher Art zur Stützung der Netzfrequenz bereits mit einer erhöhten Leistung am Netz und die Frequenzstützung durch die Windturbine ist nicht mehr erforderlich.

Der Vorteil der erfindungsgemäßen Methode gegenüber der Leistungserhöhung durch Ausnutzung der kinetischen Energie der Windturbine, wie zuvor beschrieben, ist zum Einen die wesentlich größere Zeitdauer, über die die Leistungserhöhung bewirkt werden kann und zum Anderen die nicht vorhandene oder maximal geringere Abbremsung der Windturbine, die die erhöhte Leistung einspeist. Zur Verwendung des gegenständlichen Verfahrens ist es möglich, die Windturbinen im Windpark in dem Normalbetrieb in ihrem Optimum zu betreiben und lediglich die Windturbinen des Wimdparks in der ersten Reihe relativ zur Windrichtung mit einer veränderten Einstellung gegenüber dem Optimum. Dies führt zur einer optimalen Energieausbeute eines Windparks mit gleichzeitiger Möglichkeit der Einflussnahme auf die Netzfrequenz.

Wie bereits erläutert, ist insbesondere ein Absinken der Netzfrequenz problematisch, da dann die Leistung der Windturbine erhöht werden muss, um dem Absinken der Netzfrequenz durch erhöhte Leistungseinspeisung entgegenzuwirken. Aus diesem Grunde wird vorgeschlagen, dass ein Absinken der Netzfrequenz detektiert wird.

Eine Windturbine besteht in der Regel aus einem Mast und einer Gondel. Die Gondel kann im Azimut zur Windrichtung gedreht werden. An der Gondel ist der Rotor mit drei bis acht Rotorblättern angeordnet. Die Rotorblätter sind angepitcht, so dass deren Lage zum Wind einstellbar ist. Somit sind zumindest zwei Winkeleinstellparameter denkbar, die an der Windturbine geändert werden können. Insbesondere sind dies der Pitch des Rotorblatts als auch der Azimut der Gondel. Beide Winkeleinstellparameter bewirken eine veränderte Turbulenz im Nachlauf der Windturbine, so dass eine Veränderung der Parameter Auswirkungen auf nachgeordnete Windturbinen hat.

Gemäß einem Ausführungsbeispiel wird vorgeschlagen, dass in einem Betriebsmodus, der vorzugsweise ein Teillastbetrieb ist, der Einstellparameter derart eingestellt ist, dass die Leistungsgewinnung der Windturbine aus dem zur Verfügung stehenden Wind unterhalb des Optimums ist. Insbesondere ein Androsseln der Windturbine durch Pitchen des Rotors führt zu einer verringerten Leistung. In der Folge hat dies jedoch den Effekt, dass es weniger Turbulenzen im Nachlauf dieser Windturbine kommt, und nachgeordnete Windturbinen eine etwas erhöhte elektrische Leistung erzeugen können. Für den Windpark bedeutet dies trotz geringerer Leistung von in der ersten Reihe stehenden Windturbinen eine gleichbleibend großen Gesamtleistung bei gegebenem Wind. Dadurch, dass die Leistung zumindest der Windturbine in der ersten Reihe unterhalb des Optimums ist, ist es möglich, dass bei einer detektierten Änderung der Netzfrequenz der Einstellparameter derart verändert werden kann, dass die Leistung aus dem zur Verfügung stehenden Wind erhöht oder verringert wird. Insbesondere bei einem Absinken der Netzfrequenz wird die Leistung der Windturbine erhöht, indem diese bzw. die Gondel oder die Rotorblätter in den Wind gedreht werden.

Wie bereits erwähnt, kann die Änderung der Einstellparameter zur Stützung der Netzfrequenz vorzugsweise mehr als 10 Sekunden, insbesondere mehr als 30 Sekunden, vorzugsweise jedoch weniger als 60 Sekunden betragen. Bei einer solchen Dauer kann die Netzfrequenz zuverlässig gestützt werden und die im Nachlauf befindlichen Turbinen werden noch nicht beeinflusst. Die Dauer ist dabei abhängig von dem Abstand zwischen zwei Turbinen und der Windgeschwindigkeit.

Gemäß der Erfindung wird vorgeschlagen, dass die Position der Windturbine im Windpark relativ zur Windrichtung ermittelt wird. Dies ist notwendig, um zu ermitteln, ob eine einzelne Windturbine in einer ersten Reihe relativ zum Wind steht oder nicht. Wie Eingangs bereits erläutert, ist das gegenständliche Verfahren besonders dann geeignet, wenn die Veränderung der Einstellparameter an den Windturbinen stattfindet, die in einer ersten Reihe zum Wind stehen. Diese werden vorzugsweise gedrosselt betrieben, das heißt, sie stellen eine geringere Leistung zur Verfügung. Durch die Drosselung kommt es jedoch im Nachlauf zu geringeren Turbulenzen und die nachgeordneten Windturbinen können mit einer erhöhten Leistung die Drosselung der ersten Turbinen mehr als ausgleichen, was zu einer gleichen oder gar erhöhten Einspeiseleistung des Windparks führt.

Es ist möglich, dass an einer zentralen Position die Position einer jeden Windturbine ermittelt wird. Insbesondere ist die Parktopologie zentral bekannt. Wenn nun die Windrichtung bestimmt ist, kann ermittelt werden, welche Windturbinen in einer ersten Reihe relativ zum Wind stehen.

Auch ist es möglich, dass durch ein an der Windturbine selbst angeordnetes Anemometer die Windrichtung ermittelt wird und jede einzelne Windturbine für sich überprüft, ob sie in einer ersten Reihe relativ zum Wind steht oder nicht. Hierzu muss in jeder einzelnen Windturbine die Topologie des Windparks abgespeichert sein. Auch ist es möglich, dass durch einen von der Windturbine entfernt angeordneten meteorologischen Messmast ermittelt wird, wie die Windrichtung ist und insbesondere welche Position eine jede Windturbine relativ zur Windrichtung hat.

Gemäß der Erfindung wird vorgeschlagen, dass ermittelt wird, ob die Windturbinen in einer gemessenen Windrichtung in einer relativ zur Windrichtung ersten Reihe eines Windparks angeordnet ist. Erfindungsgemäß wird für eine solche Windturbine der Einstellparameter verändert, wenn eine Veränderung der Netzfrequenz detektiert wird. Diese Windturbine wird im Normalbetrieb "gedrosselt" betrieben, um eine Leistungsreserve zu haben.

Auch wird vorgeschlagen, dass die Netzfrequenz an einem Netzanschlusspunkt des Windparks und/oder unmittelbar an der Windturbine, insbesondere am Frequenzumrichter der Windturbine und/oder einer zentralen Messeinrichtung gemessen wird. Der Vorteil der Messung der Netzfrequenz am Netzanschlusspunkt liegt in einer zentralen Erfassung, so dass nur eine einzige Messeinrichtung notwendig ist. Ist die Messung der Netzfrequenz unmittelbar an der Windturbine angeordnet, kann vorzugsweise der Frequenzumrichter verwendet werden. Auch kann die Messung der Netzfrequenz am Trafo der Turbine auf der Mittelspannungsseite (33kV) erfolgen. Die dezentrale Messung führt zu einer erhöhten Redundanz.
Auch ist es möglich, dass die Veränderung der Netzfrequenz an unterschiedlichen Punkten detektiert wird, beispielsweise an einen Netzanschlusspunkt des Windparks und/oder unmittelbar an jeder Windturbine und/oder, in einer zentralen Messeinrichtung. Vorzugsweise wird die Detektion der Veränderung der Netzfrequenz an dem Punkt durchgeführt, an dem die Netzfrequenz auch gemessen wird.

Gemäß einem Ausführungsbeispiel wird vorgeschlagen, dass die Windturbine im Normalbetrieb mit Normaleinstellparametern betrieben wird, die zu 1 bis 10%, vorzugsweise 2 bis 5% geringerer Leistung gegenüber optimalen Einstellparametern führt. Wenn die Windturbinen, die in einer ersten Reihe zum Wind in dem Windpark angeordnet sind, eine geringere Leistung im Normalbetrieb liefern, kann diese geringere Leistung jedoch durch nachgeordnete Windturbinen aufgefangen werden, da diese eine höhere Leistung aufgrund geringerer Turbulenzen liefern. Für den Gesamtwindpark bedeutet dies einen unveränderten bzw. auch leicht erhöhten Energieertrag bzw. eine leicht erhöhte oder unveränderte Leistung.

Die Drosselung der Windturbine auf eine 1 bis 10% geringere Leistung bewirkt somit eine Leistungsreserve an dieser Windturbine. Diese Leistungsreserve kann genutzt werden, um im Fall des Absinkens der Netzfrequenz diese zu stützen, indem die Einstellparameter ausgehend von den Normaleinstellparametern verändert werden, so dass die elektrische Leistung an der jeweiligen Turbine um 1 bis 10% erhöht wird.

Wenn der Wind oberhalb des Nennwindes ist, insbesondere oberhalb von 15 bis 16 m/s für den Windpark, werden alle Windturbinen mit gedrosselten Einstellparametern betrieben und haben eine Leistungsreserve. In einem solchen Fall ist die gegenständliche Androsselung der ersten Reihe nicht notwendig. Andererseits, wenn der Wind jedoch unterhalb des Nennwindes ist, werden die Turbinen mit optimalen Einstellparametern betrieben. Nur die Windturbinen in der ersten Reihe werden angedrosselt, so dass eine Leistungsreserve dort existiert.

Das gegenständliche Verfahren eignet sich insbesondere zum Betreiben eines Windparks, da die Androsselung der Windturbinen vorzugsweise in einer ersten Reihe von einer Vielzahl von Windturbinen erfolgt.

Die zuvor genannten Verfahren können auch als Computerprogramm oder als auf einem Speichermedium gespeichertes Computerprogramm realisiert werden. Hierbei kann turbinenseitig und/oder zentralseitig ein Mikroprozessor zur Durchführung der jeweiligen Verfahrensschritte durch ein Computerprogramm geeignet programmiert sein.

Die Merkmale der Verfahren und Vorrichtungen sind miteinander kombinierbar, wobei der Schutzumfang durch die Patentansprüche definiert ist.

Nachfolgend wird der Gegenstand anhand einer Ausführungsbeispiele zeigenden Zeichnung näher erläutert. In der Zeichnung zeigen:
- Fig. 1: eine schematische Draufsicht auf eine Windkraftanlage;
- Fig. 2: eine schematische Ansicht einer Windkraftanlage;
- Fig. 3: eine schematische Draufsicht auf eine Topologie eines Windparks;

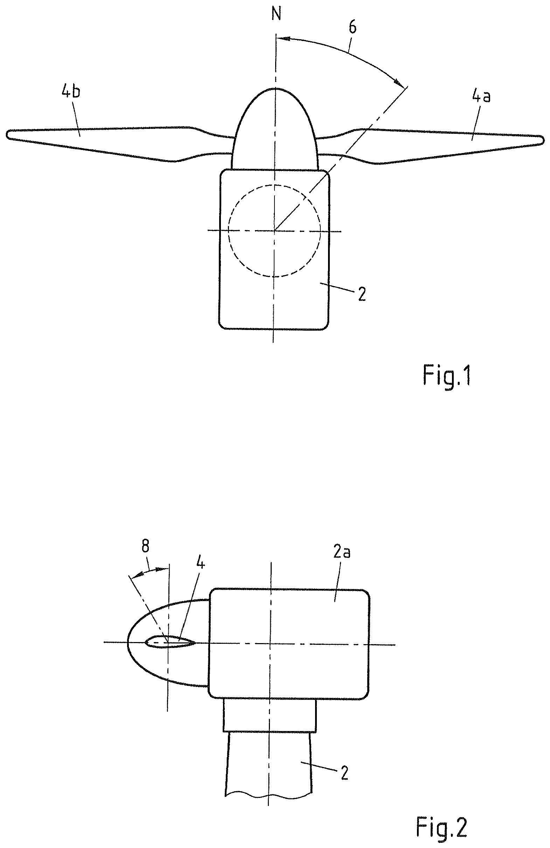

Fig. 1 zeigt eine schematische Draufsicht auf eine Gondel einer Windkraftanlage 2. An der Gondel sind Rotorblätter 4a, 4b angeordnet. Ferner ist in der Fig. 1 gezeigt, dass die Gondel der Windkraftanlage 2 um 360° drehbar um den Winkel 6 angeordnet ist. Der Winkel 6 wird auch als Azimut 6 der Windkraftanlage 2 bezeichnet. Beispielsweise kann der Winkel 6 einen Drehwinkel relativ zur Himmelsrichtung Nord darstellen. Ein Azimut 6 von 180° bedeutete dann beispielsweise, dass die Windkraftanlage 2 in Richtung Süden ausgerichtet wäre.

Fig. 2 zeigt die Gondel 2a der Windkraftanlage 2 an der die Rotorblätter 4 angeordnet sind. Zu erkennen ist, dass jedes Rotorblatt 4 in einem Winkel 8, der den Pitch des Rotorblatts 4 angibt, verschwenkt werden kann. Mit Hilfe des Winkels 8 kann der Pitch des Rotorblatts 4 eingestellt und somit die Anströmfläche des Windes auf das Rotorblatt 4 beeinflusst werden.

Die momentane Leistung einer Windkraftanlage 2 ist abhängig von der Windgeschwindigkeit, der Windrichtung, dem Azimut 6 und/oder dem Pitch 8 an der Windkraftanlage 2.

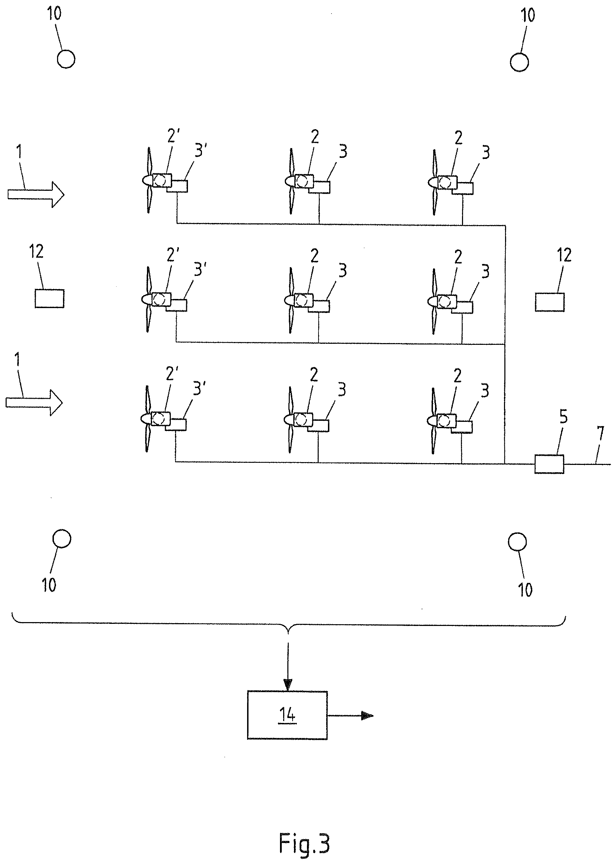

Innerhalb eines Windparks, wie er beispielsweise in Fig. 3 dargestellt ist, sind eine Vielzahl von Windkraftanlagen 2 angeordnet. Die gezeigte Anordnung ist rein schematisch.

Um die Windkraftanlagen 2 herum können meteorologische Messmasten 10 angeordnet sein. Diese sind vorzugsweise in einigen hundert Metern bis einigen Kilometern entfernt von den am äußeren Rand des Windparks angeordneten Windkraftanlagen 2 angeordnet

Eine Windkraftanlage 2 misst mit einem lokalen Windmesser, z.B. einem Anemometer, die lokale Windrichtung als auch die lokale Windgeschwindigkeit. Diese lokalen Wetterdaten werden von jeder Windkraftanlage 2 an eine zentrale Steuereinrichtung 14 übermittelt. Eine Übermittlung kann dabei über Mobilfunk, Richtfunk, Ethernet oder dergleichen erfolgen. Ein meteorologischer Messmast 10 misst mit einem Windmesser, z.B. einem Anemometer, die Windrichtung als auch die Windgeschwindigkeit. Diese Wetterdaten werden von dem meteorologischen Messmast 10 an die zentrale Steuereinrichtung 14 übermittelt. Eine Übermittlung kann dabei über Mobilfunk, Richtfunk, Ethernet oder dergleichen erfolgen.

Der meteorologische Messmast 10 erfasst somit ebenfalls Wetterdaten, beispielsweise Windgeschwindigkeit und Windrichtung. Dies kann in verschiedenen Höhen, beispielsweise in Höhen von 10, 20, 50, 100 und 200 Meter erfolgen. Diese Angabe der Höhen ist rein beispielhaft.

In der Fig. 3 ist zu erkennen, dass die in dem Windpark angeordneten Windkraftanlagen 2 an ein Energieversorgungsnetz 7 über eine zentrale Einspeisung 5 angeschlossen sind.

An jeder Windkraftanlage 2 ist ein Frequenzumrichter 3 angeordnet, der zu Ansteuerung des Generators (nicht gezeigt) der Windkraftanlage 2 eingerichtet ist und die von dem Generator erzeugte elektrische Leistung in das Leitungsnetz des Windparks einspeist.

Am Netzanschlusspunkt 5 und/oder an den Windturbinen 2, hier z.B. den Frequenzumrichtern 3 ist eine Messung einer Netzfrequenz möglich. Die gemessene Netzfrequenz kann an eine zentrale Steuereinrichtung 14 übermittelt werden.

Ferner kann eine Windrichtung 1 entweder an den einzelnen Windkraftanlagen 2 oder an den meteorologischen Messmasten 10 erfasst werden. Die erfasste Windrichtung kann ebenfalls an die zentrale Steuereinrichtung 14 übermittelt werden.

In der zentralen Steuereinrichtung 14 wird ermittelt, welche Windkraftanlagen 2 in einer ersten Reihe relativ zur Windrichtung 1 stehen. In der gezeigten Fig. 3 sind dies die Windkraftanlagen 2'. Es versteht sich, dass eine erste Reihe nicht zwingend entlang einer geraden verlaufen muss. Auch kann eine erste Reihe entlang eines Bogens verlaufen. Auch kann eine erste Reihe entlang zwei winklig zueinander verlaufenden Schenkeln verlaufen.

Im Betrieb wird der Pitch 8 der Rotorblätter 4 der Windkraftanlagen 2' so eingestellt, dass die erzeugte elektrische Leistung aus dem zur Verfügung stehenden Wind unterhalb des maximal erreichbaren Wertes ist. Dies führt dazu, dass im Nachlauf zu den Windkraftanlagen 2' verringerte Turbulenzen auftreten und die nachgeordneten Windkraftanlagen 2 eine optimale Leistung erreichen.

Wenn über die Frequenzumrichter 3 und/oder den Einspeisepunkt 5 detektiert wird, dass die Netzfrequenz des Energieversorgungsnetzes 7 einbricht, beispielsweise um 1 Hz oder auch weniger, kann die zentrale Steuereinrichtung 14 netzstabilisierend eingreifen.

Hierzu steuert die zentrale Steuereinrichtung 14 die Windkraftanlagen 2' derart an, dass der Pitch 8 verändert wird, um die aus dem Wind gewonnene elektrische Leistung an den Windkraftanlagen 2' zu erhöhen. Dies ist möglich, da die Windkraftanlagen 2' mit einer Leistungsreserve betrieben werden, wie zuvor beschrieben.

Durch die Veränderung des Pitches 8 erhöht sich die Leistung der Windkraftanlagen 2' und somit die momentane Leistung des Windparks und somit auch die in das Energieversorgungsnetz 7 eingespeiste elektrische Leistung. Dies führt zu einer Stabilisierung der Netzfrequenz.

Die im Nachlauf zu den Windkraftanlagen 2' entstehenden erhöhten Turbulenzen treffen auf die nachgeordneten Windkraftanlagen 2, abhängig von der Windgeschwindigkeit und dem Abstand der Windkraftanlagen, in einem Abstand von 30 bis 60 Sekunden. Solange erzeugen die nachgeordneten Windkraftanlagen 2 weiterhin die optimale Leistung.

Während dieser 30 bis 60 Sekunden der erhöhten Leistungseinspeisung durch den Windpark in das Energieversorgungsnetz 7 wird dessen Frequenz gestützt. Eine Erhöhung der Einspeiseleistung von herkömmlichen Kraftwerken, beispielsweise Gasturbinen, kann in dieser Zeit erfolgen, so dass nach Ablauf der 30 bis 60 Sekunden auch eine Reduktion der Leistung an den nachgeordneten Windkraftanlagen 2 unproblematisch ist. Die Leistung des Windparks bricht erst nach 30 bis 60 Sekunden ein, in welcher Zeit jedoch eine externe Frequenzstützung möglich ist.

Durch das zur Verfügung stellen der Leistungsreserve in den in einer ersten Reihe zur Windrichtung angeordneten Windkraftanlagen 2' wird der Energieertrag des Windparks nicht beeinträchtigt, da im Nachlauf dieser Windkraftanlagen 2' eine geringere Turbulenz auftritt. Das zur Verfügungstellen der Leistungsreserve ermöglicht es jedoch, kurzfristig eine Frequenzstützung durch erhöhte Leistungseinspeisung durchzuführen. Die erhöhte Leistungseinspeisung führt jedoch nicht innerhalb kürzester Zeit zu einem Einbruch der Leistung des Windparks, da gegenständlich nicht die kinetische Energie der Rotorblätter 4 der Windkraftanlage 2 genutzt wird, um eine erhöhte Leistung zu erzielen, sondern die ohnehin zur Verfügung stehende Energie.

Mit Hilfe des gegenständlichen Verfahrens ist es somit möglich, in besonders einfacher Weise eine kurzzeitige Frequenzstützung einer Netzfrequenz durchzuführen, ohne dauerhaft negativen Einfluss auf die Netzfrequenz zu nehmen.

## Patentansprüche

1. Verfahren zur Steuerung einer Windturbine (2) in einem Windpark mit den Schritten,
- Messen einer Netzfrequenz eines an die Windturbine (2) angeschlossenen Stromübertragungsnetzes (7);
- Detektieren einer Veränderung der gemessenen Netzfrequenz,
- Verändern eines Einstellparameters für einen Rotor (4) der Windturbine (2) abhängig von der detektierten Änderung der Netzfrequenz,
**dadurch gekennzeichnet,**
- **dass** die Position der Windturbine (2) im Windpark relativ zur Windrichtung (1) ermittelt wird und
- **dass** der Einstellparameter für die Windturbine (2'), die in einer gemessenen Windrichtung (1) in einer relativ zur Windrichtung (1) ersten Reihe des Windparks angeordnet ist, verändert wird.

2. Verfahren nach Anspruch 1, **dadurch gekennzeichnet, dass** die detektierte Veränderung ein Absinken der Netzfrequenz ist.

3. Verfahren nach Anspruch 1 oder 2, **dadurch gekennzeichnet, dass** der Einstellparameter ein Winkeleinstellparameter des Rotors, insbesondere ein Pitch (8) zumindest eines Rotorblatts und/oder des Azimuts (6) der Gondel des Rotors ist.

4. Verfahren nach einem der vorangehenden Ansprüche, **dadurch gekennzeichnet, dass** in einem Betriebsmodus der Einstellparameter derart eingestellt ist, dass die elektrische Leistung der Windturbine (2) aus dem zur Verfügung stehenden Wind (1) unterhalb des Optimums ist und dass bei der detektierten Änderung der Netzfrequenz der Einstellparameter derart verändert wird, dass die elektrische Leistung aus dem zur Verfügung stehenden Wind erhöht oder verringert wird.

5. Verfahren nach einem der vorangehenden Ansprüche, **dadurch gekennzeichnet, dass** in einem Betriebsmodus der Einstellparameter derart eingestellt ist, dass ein Pitch (8) eines Rotorblatts um 1° bis 10°, vorzugsweise 2° bis 5° gegenüber einer Optimaleinstellung verstellt ist.

6. Verfahren nach einem der vorangehenden Ansprüche, **dadurch gekennzeichnet, dass** bei einer Veränderung der Netzfrequenz der Einstellparameter für einen Zeitraum von mehr als 10 Sekunden, und/oder mehr als 30 Sekunden, vorzugsweise weniger als 60 verändert wird.

7. Verfahren nach einem der vorangehenden Ansprüche, **dadurch gekennzeichnet, dass** die Position der Windturbine (2) im Windpark relativ zur Windrichtung (1) durch ein an der Windturbine angeordnetes Anemometer und/oder durch einen von der Windturbine entfernt angeordneten meteorologischen Messmasten (10) ermittelt wird.

8. Verfahren nach einem der vorangehenden Ansprüche, **dadurch gekennzeichnet, dass** die Netzfrequenz an einem Netzanschlusspunkt (5) des Windparks und/oder unmittelbar an der Windturbine (2), insbesondere am Frequenzumrichter (3) der Windturbine (2) und/oder einer zentralen Messeinrichtung gemessen wird und/oder dass die Veränderung der Netzfrequenz an einem Netzanschlusspunkt (5) des Windparks und/oder unmittelbar an der Windturbine (2), insbesondere am Frequenzumrichter (3) der Windturbine (2) und/oder einer zentralen Messeinrichtung detektiert wird.

9. Verfahren nach einem der vorangehenden Ansprüche, **dadurch gekennzeichnet, dass** die Windturbine (2) im Normalbetrieb mit Normaleinstellparametern betrieben wird, die zu einer um 1 bis 10%, vorzugsweise 2 bis 5% geringeren Leistung gegenüber optimalen Einstellparametern führen.

10. Verfahren nach einem der vorangehenden Ansprüche, **dadurch gekennzeichnet, dass** die Windturbine (2) im Normalbetrieb mit Normaleinstellparametern bei Windstärken unterhalb des Nennwinds betrieben wird.

11. Verfahren zum Betreiben eines Windparks, bei dem zumindest eine Windturbine nach einem Verfahren nach Anspruch 1 betrieben wird.

12. Verfahren nach Anspruch 11, **dadurch gekennzeichnet, dass** Windturbinen (2) im Windpark, die relativ zur Windrichtung (1) nicht in einer ersten Reihe angeordnet sind, mit optimalen Einstellparametern betrieben werden und dass zumindest eine Windturbine (2') im Windpark, die relativ zur Windrichtung (1) in der ersten Reihe angeordnet ist, mit Nenneinstellparametern betrieben wird, so dass im Windschatten dieser Windturbine (2') gegenüber einem Betrieb mit optimalen Einstellparametern verringerte Verwirbelungen auftreten.

## Claims

1. Method for controlling a wind turbine (2) in a wind farm comprising the steps of,
- measuring a grid frequency of a power transmission grid (7) connected to the wind turbine (2);
- detecting a change in the measured grid frequency,
- changing a setting parameter for a rotor (4) of the wind turbine (2) depending on the detected change in the grid frequency,
**characterized in that**,
- the position of the wind turbine (2) in the wind farm is determined relative to the wind direction (1), and
- the setting parameter for the wind turbine (2'), which is arranged in a first row of the wind farm relative to the wind direction of a measured wind direction (1), is changed.

2. Method according to claim 1, **characterized in that** the detected change is a decrease in the grid frequency.

3. Method according to claim 1 or 2, **characterized in that** the setting parameter is an angular setting parameter of the rotor, in particular a pitch (8) of at least one rotor blade and/or the azimuth (6) of the nacelle of the rotor.

4. Method according to one of the preceding claims, **characterized in that** in an operating mode the setting parameter is set in such a way that the electrical power of the wind turbine (2) from the available wind (1) is below the optimum, and **in that** when a change in the grid frequency is detected the setting parameter is changed in such a way that the electrical power from the available wind is increased or reduced.

5. Method according to one of the preceding claims, **characterized in that** in an operating mode the setting parameter is set in such a way that a pitch (8) of a rotor blade is adjusted by 1° to 10°, preferably 2° to 5°, relative to an optimum setting.

6. Method according to one of the preceding claims, **characterized in that**, when the grid frequency is changed, the setting parameter is changed for a period of more than 10 seconds, and/or more than 30 seconds, preferably less than 60.

7. Method according to one of the preceding claims, **characterized in that** the position of the wind turbine (2) in the wind farm relative to the wind direction (1) is determined by an anemometer arranged on the wind turbine and/or by a meteorological measuring mast (10) arranged at a distance from the wind turbine.

8. Method according to one of the preceding claims, **characterized in that** the grid frequency is measured at a grid connection point (5) of the wind farm and/or directly at the wind turbine (2), in particular at the frequency converter (3) of the wind turbine (2) and/or a central measuring device and/or that the change in the grid frequency is detected at a grid connection point (5) of the wind farm and/or directly at the wind turbine (2), in particular at the frequency converter (3) of the wind turbine (2) and/or a central measuring device.

9. Method according to one of the preceding claims, **characterized in that** the wind turbine (2) is operated in normal operation with normal setting parameters which result in a 1 to 10%, preferably 2 to 5% lower power output compared with optimum setting parameters.

10. Method according to one of the preceding claims, **characterized in that** the wind turbine (2) is operated in normal operation with normal setting parameters at wind strengths below the nominal wind.

11. Method for operating a wind park, in which at least one wind turbine is operated according to a method according to claim 1.

12. Method according to Claim 11, **characterized in that** wind turbines (2) in the wind park, which are not arranged in a first row relative to the wind direction (1), are operated with optimum setting parameters, and **in that** at least one wind turbine (2') in the wind park, which is arranged in the first row relative to the wind direction (1), is operated with nominal setting parameters, so that reduced turbulences occur in the lee of this wind turbine (2') compared with operation with optimum setting parameters.

## Revendications

1. Procédé de contrôle d'une éolienne (2) dans un parc éolien, comprenant les étapes de
- mesure d'une fréquence de réseau d'un réseau de transport de l'électricité (7) raccordé ;
- détection d'une modification de la fréquence de réseau mesurée,
- modification d'un paramètre de réglage pour un rotor (4) de l'éolienne (2) en fonction de la modification détectée de la fréquence de réseau,
**caractérisé en ce que**
- la position de l'éolienne (2) dans le parc éolien est déterminée par rapport à la direction du vent (1) et
- **en ce que** le paramètre de réglage est modifié pour l'éolienne (2') qui est agencée dans une première rangée du parc éolien par rapport à la direction du vent (1) dans une direction du vent (1) mesurée.

2. Procédé selon la revendication 1, **caractérisé en ce que** la modification détectée est une réduction de la fréquence de réseau.

3. Procédé selon la revendication 1 ou 2, **caractérisé en ce que** le paramètre de réglage est un paramètre de réglage angulaire du rotor, en particulier le pas (8) d'au moins une pale de rotor et/ou l'azimut (6) de la nacelle du rotor.

4. Procédé selon l'une des revendications précédentes, **caractérisé en ce que** dans un mode de fonctionnement, le paramètre de réglage est ajusté de telle sorte que la puissance électrique de l'éolienne (2) est inférieure à l'optimum pour le vent (1) actuel et **en ce que** pour la modification détectée de la fréquence de réseau, le paramètre de réglage est modifié de sorte que la puissance électrique est augmentée ou diminuée en fonction du vent actuel.

5. Procédé selon l'une des revendications précédentes, **caractérisé en ce que** dans un mode de fonctionnement, le paramètre de réglage est ajusté de sorte que le pas (8) d'une pale de rotor est ajusté aux alentours de 1° à 10°, de préférence de 2° à 5° par rapport à un ajustement optimal.

6. Procédé selon l'une des revendications précédentes, **caractérisé en ce que** lors de la modification de la fréquence de réseau, le paramètre de réglage est modifié pendant une période de plus de 10 secondes, et/ou plus de 30 secondes, de préférence moins de 60 secondes.

7. Procédé selon l'une des revendications précédentes, **caractérisé en ce que** la position de l'éolienne (2) dans le parc éolien est déterminée par rapport à la direction du vent (1) par un anémomètre disposé sur l'éolienne et/ou par un mât de mesure météorologique (10) disposé séparé de l'éolienne.

8. Procédé selon l'une des revendications précédentes, **caractérisé en ce que** la fréquence de réseau est mesurée en un point de raccord de réseau (5) du parc éolien et/ou directement sur l'éolienne (2), en particulier sur le convertisseur de fréquence (3) de l'éolienne (2) et/ou un dispositif de mesure central et/ou **en ce que** la modification de la fréquence de réseau est détectée en un point de raccord de réseau (5) du parc éolien et/ou directement sur l'éolienne (2), en particulier sur le convertisseur de fréquence (3) de l'éolienne (2) et/ou un dispositif de mesure central.

9. Procédé selon l'une des revendications précédentes, **caractérisé en ce que** l'éolienne (2) est mise en fonctionnement en mode normal avec des paramètres de réglage normaux, qui entrainent une puissance plus faible de 1 à 10%, de préférence 2 à 5% par rapport aux paramètres de réglage optimaux.

10. Procédé selon l'une des revendications précédentes, **caractérisé en ce que** l'éolienne (2) est mise en fonctionnement en mode normal avec des paramètres de réglage normaux pour des forces de vent inférieures au vent nominal.

11. Procédé de fonctionnement d'un parc éolien, dans lequel au moins une éolienne fonctionne selon le procédé de la revendication 1.

12. Procédé selon la revendication 11, **caractérisé en ce que** les éoliennes (2) du parc éolien, qui ne sont pas disposées dans une première rangée par rapport à la direction du vent (1), sont mises en fonctionnement avec des paramètres de réglage optimaux et **en ce qu'**au moins une éolienne (2') du parc éolien, qui est disposée dans une première rangée par rapport à la direction du vent (1), est mise en fonctionnement avec des paramètres de réglage nominaux, de sorte que dans le sillage de cette éolienne (2'), les turbulences sont minimales par rapport à un fonctionnement avec des paramètres de réglage optimaux.
